# EUROPEAN PATENT SPECIFICATION

(11) **EP 1 005 774 B1**
(45) Date of publication and mention of the grant of the patent: **21.03.2007**
(21) Application number: 98940733.3
(22) Date of filing: 18.08.1998
(51) Int. Cl.: H04Q 7/38, G01S 5/14

(54) **METHOD AND SYSTEM FOR DETERMINING THE POSITION OF MOBILE RADIO TERMINALS**
VERFAHREN UND SYSTEM ZUR POSITIONSBESTIMMUNG VON MOBILEN FUNKENDGERÄTEN
PROCEDE ET SYSTEME D'EVALUATION DE LA POSITION DE TERMINAUX DU SERVICE RADIO MOBILE

(30) Priority: 18.08.1997 US 917577; 23.12.1997 US 996937
(43) Date of publication of application: 07.06.2000
(73) Proprietor: TELEFONAKTIEBOLAGET LM ERICSSON (publ), 164 83 Stockholm (SE)
(72) Inventor: HAGERMAN, Bo, S-116 21 Stockholm (SE); MAZUR, Sara, S-167 71 Bromma (SE); GHISLER, Walter, S-194 47 Upplands Väsby (SE); FORSSEN, Ulf, S-132 39 Saltsjö-Boo (SE); BERG, Jan-Erik, S-191 40 Sollentuna (SE)
(74) Representative: HOFFMANN EITLE
(86) International application number: PCT/SE1998/001487
(87) International publication number: WO 1999/009778

(56) References cited:
- WO-A-96/25830
- WO-A-97/14257
- DE-A- 4 409 178
- US-A- 5 317 323
- US-A- 5 327 144
- US-A- 5 608 410

## Description

### BACKGROUND OF THE INVENTION

### Technical Field of the Invention

The present invention relates in general to the mobile radio communications field and, in particular, to a method and system for use in determining the geographical position of a mobile radio terminal.

### Description of Related Art

Mobile radio position determination is an emerging field that has gained a great deal of interest lately, and it is now desirable to include a position determination capability in future cellular mobile radio systems. The Time Difference of Arrival (TDOA) position determination method, which is known from military applications, has been used successfully for determining the position of mobile radio terminals. A typical TDOA position determination system can be either terminal based, whereby the Time Of Arrival (TOA) measurements are made on the "downlink" in the mobile station (MS), or network based, whereby the network performs the TOA measurements on the "uplink" in the radio base stations (BSs). These TOA measurements are then used to calculate TDOA parameters and estimate the MS's position.

One position determination system, which has been used for cellular mobile radio position determination, is marketed by True Position^{™}. This system has been used for determining the position of standard analog mobile radio terminals which operate in accordance with the IS-54 standard. Currently, these terminals constitute the vast majority of mobile radio terminals being used in the United States. The TruePosition system, with its own listening radio base stations, is operated independently of cellular systems and can serve wireline ("A" frequency band) and non-wireline ("B" frequency band) operators within the same geographical area. As such, these operators can share the same TruePosition position determination system. Upon request, the TruePosition system provides position information of individual cellular mobile radio terminals. Otherwise, the position determination system normally does not communicate with the cellular mobile radio systems.

As mentioned earlier, the TDOA method of position determination used by the TruePosition system is based on a known military application. Essentially, with the TDOA method, the absolute TOAs of an uplink message transmitted by a mobile radio terminal are registered in at least three fixed radio BSs. This information is processed in a centrally located processor, which calculates the position of the terminal. The registration of uplink messages in the TruePosition system is directed primarily to uplink control messages on the (analog) access channels (i.e., "reverse control channels" under the IS-54 standard). Notably, under the IS-54 standard, some of these control messages (e.g., registering messages and page response messages) contain the terminal identity in unencrypted code, which enables the TruePosition system to determine the position of a specific terminal without having to obtain any information from the cellular network operator responsible for the terminal concerned. The IS-54 standard further eases the positioning task by having all of the access channels assigned to a few, fairly narrow frequency bands, rather than having them dispersed over a wide frequency band among the traffic channels (e.g., as is the case for the IS-136 standard).

However, the primary use of access channels means that position determination is more easily performed for mobile radio terminals in an idle mode, because the access channels are used only by idle terminals (e.g. when registering or after being paged). If the position of a mobile terminal is to be determined while it is in a conversation mode, the TruePosition system has the option of utilizing a few traffic channels for voice channel tracking. Consequently, for example, if a police person's position is to be determined during an action while talking over a handheld radiophone, the network is required to hand-off or originally assign the radiophone to a traffic channel being monitored by the TruePosition system.

U.S. Patent No. 5,327,144 to Stilp, et al. discloses a TDOA cellular telephone location system (apparently associated with the TruePosition system). According to this patent, the uplink signals transmitted periodically (e.g. cellular registering messages which can occur every 15 minutes under the IS-54 protocol) by a mobile radio terminal on a reverse (analog) control channel are received and recorded by at least 3 radio base stations. The TOA of each signal is recorded at the respective radio base station together with the identity of the transmitting terminal (contained in the uplink message). This information is transferred to a processor, which uses the TDOAs resulting from the three TOAs and the known locations of the radio base stations to calculate the position of the so-identified mobile radio terminal.

PCT Application No. WO 94/27161 to Stilp et al. (also apparently associated with the TruePosition system) discloses a TDOA system for determining the position of a mobile transmitter. The uplink signals transmitted responsively rather than periodically (e.g., cellular page-acknowledgment messages) by a mobile radio terminal are received, time-stamped with the TOA, and recorded by a plurality of BSs together with the identity of the transmitting terminal (contained in the uplink message). This information is transferred to a processor, which uses the TOAs and known locations of the radio BSs to calculate the position of the so-identified mobile radio terminal.

Although the above-described documents illustrate considerable progress in the cellular position determination field, there are still a number of problems left to be resolved. For example, the above-described TDOA method is generally not applicable to analog voice channels in an IS-54 system, because the voice channel frequencies are distributed to the radio BSs according to a frequency plan. If predetermined voice channels (frequencies) are to be used for position determination measurements instead of predetermined access channels, some radio BSs will be unable to assign voice channels on these predetermined frequencies because the BSs' combiners are tuned to base station-specific frequencies that may not include the predetermined frequencies. Consequently, the position of the terminals communicating with these radio BSs cannot be determined by the above-described method when those terminals are operating in the conversation mode.

An additional problem with the above-described positioning method in particular, when applied to a mobile radio terminal in the conversation mode on a traffic channel, relates to the power control of the mobile radio terminal. If the mobile terminal is near the serving radio base station, the land system will send power control orders to the mobile radio terminal requesting low uplink transmission power. More distant radio base stations ordered to measure TOA then will not receive a strong enough signal to perform the TOA measurements and read the terminal identity, if the distance from the mobile radio terminal is such that interference exceeds a certain limit.

Yet another problem with the above-described mobile terminal positioning method is that it is not applicable for digital voice channels in an IS-54 system, and the mobile terminal has to be handed over to one channel among a plurality of predetermined analog voice channels before the positioning method can be used. Furthermore, the above-described positioning method is difficult to apply under purely digital standards, such as in an IS-136 system (among others), because the control channels can be at any frequencies in the assigned frequency band, and it is impossible to record all traffic on all channels in advance before a position determination request has been received. Moreover, in some cellular mobile radio systems such as the digital Global System for Mobile communications (GSM), a frequency-hopping mode is used for traffic channels, which makes it virtually impossible to determine a mobile terminal's position according to the above-described method.

In conclusion, a need exists for a method of determining the position of any cellular mobile radio terminal on any uplink traffic channel or control channel and in accordance with any present and future mobile communication standards.

One problem addressed by the present invention is how to determine the geographical position of any digital or analog mobile radio terminal while applying an uplink TDOA method to ordinary digital and analog traffic channels (e.g., voice channels), but recognizing that mobile terminals operating in a conversation mode on traffic channels normally do not transmit their identities on the uplink, and that the traffic channels may be utilized in a frequency-hopping mode.

Another problem addressed by the present invention is how to determine the geographical position of standard digital and analog mobile radio terminals when directional antennas (e.g., antenna arrays) are available for use in the radio BSs, and thus how to supplement the uplink TDOA method with direction of arrival (DOA) measurements.

Still another problem addressed by the present invention is how to determine the geographical position of mobile radio terminals operating in a conversation mode using TDMA time slots on a carrier frequency, wherein "bursts" in the time slots can overlap with those in other time slots upon arriving at non-serving radio BSs, because the time alignment (TA) system function is designed to avoid such overlaps only at the serving radio BS.

Still another problem addressed by the present invention is how to improve the accuracy of measurements in certain geographical locations that require enhanced position determination of a mobile radio terminal. For example, the requirement for accuracy may vary depending on the environment (rural outdoors, urban indoors, etc.) of the mobile terminal needing the position determination.

Still another problem addressed by the present invention is how to enable radio base stations, as far as received radio energy is concerned, to measure the TOA of uplink signals transmitted from distant mobile radio stations.

Therefore, it is an object of the present invention to provide an uplink TDOA method and apparatus for determining the position of a mobile radio terminal operating in the conversation mode directly on an arbitrary analog or digital traffic channel of a mobile radio system, wherein non-frequency-hopping traffic channels are present and frequency-hopping traffic channels may be present.

It is another object of the present invention to provide an uplink TDOA method and apparatus for determining the position of a mobile radio terminal operating in the conversation mode directly on an arbitrary analog or digital traffic channel of a mobile radio system, wherein direction measurements are made in the fixed part of the system to supplement the TDOA measurements.

It is yet another object of the present invention to provide an uplink TDOA method and apparatus for determining the position of a mobile radio terminal operating in the conversation mode directly on an arbitrary analog or digital traffic channel of a mobile radio system, wherein the overlapping of received bursts can be avoided.

It is still a further object of the present invention to provide an uplink TDOA method and apparatus for determining the position of a mobile radio terminal operating in the conversation mode directly on an arbitrary analog or digital traffic channel of a mobile radio system, wherein locally enhanced accuracy can be provided as needed.

It is still another object of the present invention to provide an uplink TDOA method and apparatus for determining the position of a mobile radio terminal operating in the conversation mode directly on an arbitrary analog or digital traffic channel of a mobile radio system, wherein base stations (including the case where distant radio base stations are taking part in the position determination) are provided with enough received uplink signal energy to determine the TOA of the signals.

According to a first aspect of the invention, there is provided a method for determining the geographical position of a first mobile radio terminal in a mobile radio system, said mobile radio system including a network controller and at least two radio base stations each including at least one uplink TOA measuring unit each located at a different location with respect to one another and each operable to communicate with said network controller, a control unit and a time reference unit operable to provide timing reference signals to said uplink TOA measuring units, at least one of said at least two radio base stations collocated with and connected to a second mobile radio terminal, said second mobile radio terminal coupled to said network controller via a radio air interface, and a service node operable to store known positions of at least two of said uplink TOA measuring units, the method comprising the steps of : receiving a request in said mobile radio system to determine the geographical position of said first mobile radio terminal; determining and reporting the position of said second mobile radio terminal to said service mode; directing said first mobile radio terminal to transmit digital signals uplink on the traffic channel when said first mobile terminal is not transmitting or transmitting only analog signals; measuring in each uplink TOA measuring unit an uplink TOA measurement of the digital signals transmitted by the first mobile radio terminal; receiving in said network controller said uplink TOA measurement from each uplink TOA measuring unit and a traffic channel number to said traffic channel; translating said traffic channel number to an identity of said first mobile radio terminal; conveying said uplink TOA measurements and said first mobile radio terminal identity to said service node; and calculating in said service node the position of said first mobile radio terminal using said known positions of said plurality of uplink TOA measuring units and said uplink TOA measurements.

According to a second aspect of the invention, there is provided measuring equipment for use in a mobile radio system including apparatus for position determination measurements, said measuring equipment connected to a network controller, a time reference unit, and at least one receiving antenna, comprising: first means for measuring TOA, said first means coupled to said time reference; second means for conveying said first means digital uplink information from a channel to be measured, and using correlation with non-variable traffic channel information for determining TOA; at least one radio receiver, said at least one radio receiver including at least one demodulator; a receiving frequency synthesizer operable to couple to said at least one demodulator a frequency that enables position determination measurements on a specific traffic channel; and means for receiving and storing frequency hopping sequences to enable a TOA measurement on frequency hopping traffic channels.

According to a third aspect of the invention, there is provided a base station comprising the measuring equipment and further comprising at least one TOA meter for measuring TOA on traffic channels, said at least one TOA meter operable to communicate with a network controller of said radio base station and synchronize with a TOA meter of at least a second radio base station, and wherein a plurality of transmitter-receivers of said first radio base station is not synchronized with a plurality of transmitter-receivers of said at least a second radio base station.

According to a fourth aspect of the invention, there is provided a network controller for determining a position of a mobile radio terminal, comprising: means for directing plurality of radio base stations to perform TOA measurements on a specified traffic channel; means for translating a channel identity to an identity of said mobile radio terminal; and means for conveying said TOA measurements and said identity of said mobile radio terminal to a service node for use in calculating said position of said mobile radio terminal.

According to a fifth aspect of the invention, there is provided a service node for use in calculating mobile terminal position information in a cellular mobile radio network, comprising: means for receiving position information requests; means for requesting a mobile radio terminal to transmit digital signals uplink on a traffic channel if said mobile radio terminal is transmitting either analog signals or no signals; means for storing known radio base station position information for use in said calculating said mobile terminal position information; means for receiving TOA measurements from a network controller; and means for calculating said mobile terminal position information using TOA information associated with said mobile terminal, and said known radio base station position information.

According to a sixth aspect of the invention, there is provided a mobile radio system capable of determining a geographical position of a mobile radio terminal located in said mobile radio system, comprising: a network controller, a radio base station including a plurality of uplink TOA measuring units each located at a different location with respect to one another and each operable to communicate with said network controller, and a time reference unit operable to provide timing signals to each uplink TOA measuring unit; mobile unit comprising a base station collocated to a second mobile radio terminal, said second mobile radio terminal being coupled to the network controller via a radio air interface; and a service node operable to store known positions of said plurality of uplink TOA measuring units, said mobile radio system operable to determine said geographical position of said mobile radio terminal, by receiving a request to determine said geographical position of said mobile radio terminal, directing said mobile radio terminal to transmit digital signals uplink on a traffic channel if said mobile radio terminal is transmitting analog signals or no signals, measuring TOA information on said traffic channel in each uplink TOA measuring unit receiving from each uplink TOA measuring unit said TOA measurement information in said network controller and a reference to said traffic channel, translating an identity of said traffic channel to an identity of said mobile radio terminal, conveying said uplink TOA measurement information and identity to said service node, and calculating in said service node the geographical position of said mobile radio terminal using said known position information of said plurality of uplinks to measuring units and said uplink TOA measurement information.

A more complete understanding of the method and apparatus of the present invention may be had by reference to the following detailed description when taken in conjunction with the accompanying drawings wherein:
FIGURE 1 is a schematic block diagram that shows a cellular mobile radio system with an integrated position determination function, in accordance with a preferred embodiment of the present invention;
FIGURE 2 is a schematic block diagram that shows details of the modified receiver (ModRX) 130 shown in FIGURE 1;
FIGURE 3 is a diagram that illustrates a format for a reverse (uplink) time slot under the IS-136 standard on which TOA measurements are made, in accordance with the present invention;
FIGURE 4 is a diagram that illustrates a format for a reverse (uplink) voice channel message stream under the IS-54 standard on which TOA measurements are made, in accordance with the present invention;
FIGURE 5 is a flow chart that illustrates a position determination method that can be used in conjunction with the system shown in FIGURE 1, in accordance with the present invention; and
FIGURE 6 is a schematic block diagram that shows a cellular mobile radio system with an integrated position determination function in accordance with the preferred embodiment shown in FIGURE I, but modified to implement the novel concept of "cascaded position determination".
FIGURE 7 is a schematic block diagram that shows a cellular mobile radio system in accordance with the preferred embodiment shown in FIGURE 1, but modified to use reference mobile station(s) instead of the GPS and time reference unit.

The following describes a system for integrating the positioning functions in the land network of the mobile radio system that handles the mobile radio terminal. In particular, the uplink TOA (and optionally DOA) measurements needed for mobile terminal position determinations are performed on demand in the radio BSs of the mobile radio system using a modified Receiver (ModRX) in which the usual functions of a Transmitter-Receiver (TX-RX) have been supplemented by the functions of measuring equipment. In the preferred embodiment, the TX part is not used in the ModRX and therefore may be excluded. Measurement orders are sent by a network controller, such as, for example, a Mobile Services Switching Center (MSC) to one or more BSs, and the orders identify the radio channel on which to make the measurements. The measurements are made and reported back to the network controller, and from there (together with the identity of the mobile terminal associated with the radio channel at that particular time) to a processor in a Service Node (SN) that calculates the position of the mobile radio terminal.

In one embodiment, the ModRX module in a cellular mobile radio system operating in accordance with the IS-136 standard, is ordered by the MSC to measure the TOA of signals on a specified uplink traffic channel, using a channel number (corresponding to an associated frequency and timeslot-specific sync-word) for traffic channel identification. When this measurement activity is completed, the ModRX transmits its TOA measurements back to the network controller (MSC) together with the traffic channel number (CHN). The network controller uses a look up table to translate the CHN to the identity (MS-ID) of the mobile terminal operating on the traffic channel at that time. Previously, the MS-ID and CHN information had been copied from a call setup record available in the cellular system and entered into the look up table when the measurement was ordered. The TOA measurements, along with the associated mobile terminal identity provided by the network controller, are provided as input parameters to the position determination calculations, which are performed in the SN in the network making use of at least three simultaneous measurements performed on the same terminal in three different radio base stations. The ModRX is synchronized to the digital information on the traffic channel on which it makes the measurements, and the TOA measurements are made relative to an accurate time reference (e.g., provided by the satellite-based Global Positioning System, GPS, or some other known absolute time reference).

In another version of the first embodiment, improved accuracy and flexibility can be achieved by replacing the absolute time reference provided by GPS with a relative time reference provided by at least one reference mobile station.

In a second embodiment, the mobile terminal position determination method and apparatus described above is supplemented by a ModRX performing DOA measurements, which are reported the same way as the TOA measurements described above. The DOA measurements are provided as input parameters to the position determination algorithm in the SN. If both TOA and DOA measurements are available for use in the position determination algorithm, only one radio BS reporting measurements of a radio channel is needed to obtain an unambiguous position determination result (e.g. using the intersection of the TOA distance circle and the line indicating the DOA).

In a third embodiment, in those circumstances where distant BSs have to be used for position determination measurements, the TOA measurements made in the ModRX are performed after first performing a handover, so that time slots on the same carrier and adjacent to the measured traffic channel time slot are unused by other mobile connections. As mentioned above, this enables the use of distant BSs for positioning in those cases where there are no nearby alternate BSs available, and the use of a distant BS without first performing a handover would have caused a disturbing burst overlap.

In a fourth embodiment, the TOA measurements are made by a ModRX located remotely from, but still connected to, its radio BS. In accordance with this embodiment, the local position determination accuracy can be improved with low additional cost where required.

In one version of the fourth embodiment, improved measurement accuracy can be achieved by fixed ModRX equipment connected to a nearby base station via a fixed connection (e.g., coaxial cable, glass fiber optical cable, or copper wire). In a second version of this embodiment, hereinafter referred to as "cascaded position determination", improved measurement accuracy can be achieved by arranging mobile ModRX equipment in a motor vehicle (e.g., ambulance, police patrol car, military vehicle, etc.). In accordance with the teachings of the present invention, a method of determining the position of a motor vehicle can be accomplished by performing, at a fixed base station, TOA/DOA measurements for a mobile station located in the motor vehicle. This same mobile station is preferably hard-wired to the (ModRX) base station also located in the motor vehicle. This mobile station reports over the cellular mobile radio system the TOA/DOA measurements performed by the ModRX of the base station located in the motor vehicle. The ModRX can include a GPS receiver, which allows determination of the position of the motor vehicle either through the cellular system alone or through the GPS in cases where better accuracy is desired. However, the measurement reporting is accomplished via the cellular system. An additional possibility is to park the motor vehicle in one of a number of predetermined parking spots with known positions, and manually reporting the position.

In a fifth embodiment, the serving radio base station is very near to the mobile radio terminal (MS). Before ordering TOA measurements to be made by a ModRX in a distant BS, the mobile radio terminal (MS) is forced to increase its transmitting power. This increase can be achieved by having the network controller order the MS to transmit with higher power during measurements, or by handing the MS off to a more distant serving BS, which also results in higher i transmission power from the MS.

In a sixth embodiment, the ModRX of the radio BS measuring TOA does not receive enough signal energy to make a reliable measurement on a signal message. However, since no reading of variable information on the traffic channel is associated with the TOA measurements being made in accordance with the invention, more than one message is received, thus accumulating received energy of non-variable information (e.g., sync word, CDMA code pattern, etc.) over a longer integration time than one message, which improves the signal-to-noise ratio for the signal on which the TOA measurement is being made.

In a seventh embodiment, the ModRX of the radio BS measuring TOA does not receive enough signal energy above the interference level to make a reliable measurement. Before ordering TOA measurements to be made by the ModRX in that distant BS, the mobile radio terminal (MS) is handed off to another traffic channel in the same serving BS (intra-BS handoff), wherein the new traffic channel is chosen to be less disturbed by interference in that distant BS performing TOA measurements.

One important technical advantage of the present system is that the position determination method can be applied to any analog and digital systems, and circuit-switched and packet-switched traffic and control channels, provided that the mobile radio terminal involved conveys or can be caused to convey any uplink digital (or digitized) information, because the ModRX listens to digital information known in advance (e.g. a sync-word) on any specified uplink radio channel without needing to read any terminal identity information or other variable information on the channel.

Another important technical advantage of the present system is that a number of popular mobile communications systems (e.g., the Ericsson CMS88 system) have modules that measure uplink signal strength in connection with "verification" before handover (i.e., checking uplink signal strength in the target BS), and the present inventive measurement module can be obtained by modifying such a measurement module whereby the procedures and signal protocols necessary for position determination are readily available from the handover functions.

Yet another important technical advantage of the present system is that the present position determination method applies equally as well during a call as when the mobile terminal is in the idle mode, because (as mentioned above) a requirement is that the mobile terminal involved can send digital information uplink, and no variable information is read while the measurements are being performed. This total capability can be important for certain critical situations, such as, for example, during a police action.

Still another important technical advantage of the present system is that it is possible to install measuring modules ModRX remotely from a radio BS and thereby improve the local accuracy of the position determination measurements, by having just the measuring modules available in numerous different locations without the need for numerous complete radio BSs. This technical advantage is even more apparent when there are mobile measuring modules ModRX located in motor vehicles taking part in a rescue, police or military action, because the measuring accuracy is improved locally just during the time when measurement accuracy is most needed.

A further important technical advantage of the present system is that it is possible to make measurements on frequency-hopping channels, because information about the hopping sequences is readily available in the mobile radio land network.

Still another important technical advantage of the present system is that it enables increasing the received signal energy in the radio BSs when needed, by integrating energy in the receiver over more than one message (made possible because the contents of the messages do not matter), by increasing the transmission power in the MS (made possible by integration of the position determining function in the cellular system), or by handing off the MS by an intra-BS handoff to a traffic channel that is less disturbed by interference in a BS performing TOA measurements (again made possible by integration of the position determining function in the cellular system).

A further important technical advantage of the present system is the option of using at least one reference mobile station instead of absolute time references such as GPS and national radio transmitters in determining the position of a mobile station. The technical advantage of using reference mobile station(s) instead of the GPS national radio transmitters is even more apparent in that the frequencies between the reference mobile station(s) and mobile radio terminal to be located are the same or similar, whereas the frequency associated with the GPS national radio transmitter and the mobile station are obviously different.

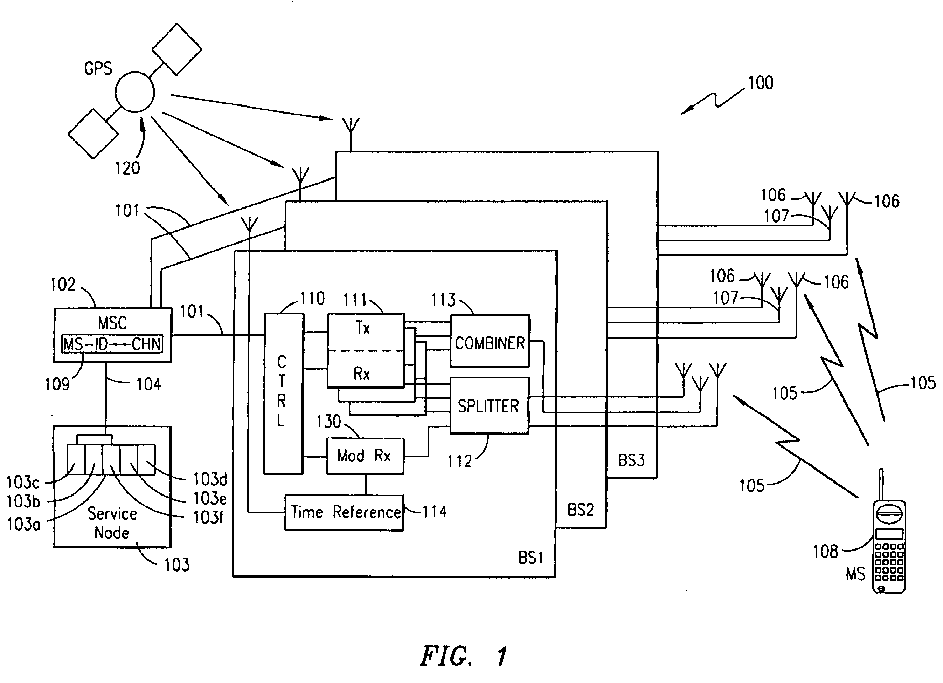

The preferred embodiment of the present invention and its advantages are best understood by referring to FIGUREs 1-7 of the drawings, like numerals being used for like and corresponding parts of the various drawings.

Essentially, the present invention provides an uplink TDOA method for mobile radio terminal position determination, which, in a preferred embodiment, is based on a further development of a verification procedure applied in conjunction with handoffs in Ericsson systems operating in accordance with the IS-54, IS-136 and Pacific Digital Cellular (PDC) standards. When a handoff request is sent to the MSC, the MSC orders a specific base station module in the target cell to perform the verification. In an Ericsson system, such a module is called a Location and Verification Module (LVM) under the IS-136 standard, and a Verification Receiver (VRX) under the PDC standard. The purpose of this function is to verify the presence of the mobile terminal in the target cell. The verification module tunes to and verifies the mobile terminal's presence on the old channel. The result of the verification is sent to the MSC.

In accordance with the present invention, the position determination uplink measurements carried out by the BSs may include temporal (e.g., TOA) and angular measurements. The TOA measurements constitute a preferred method of measurement. However, angular measurements may be used to supplement the TOA measurements, in particular if a BS is equipped with adaptive antennas (antenna arrays) which readily enable the estimation of the DOA of signals from a mobile terminal. The mobile terminal's position can be estimated from the TOA and/or DOA measurements performed in one BS. Alternatively, the TOA and DOA measurements of a plurality of BSs can be combined in order to estimate a mobile terminal's position.

FIGURE 1 is a schematic block diagram that shows a cellular mobile radio system 100 with an integrated position determination function, in accordance with a preferred embodiment of the present invention. System 100 includes a plurality of radio BSs (an exemplary three are shown as BS1, BS2, BS3). The radio base stations are located at different sites and connected to a wire-bound network via communication links 101. The wire-bound network can include, for example, an MSC 102 connected in turn via a Public Switched Telephone Network or PSTN (not explicitly shown) to an SN 103. The connection 104 preferably comprises trunk connections. The MSC 102 includes a look up table 109 for associating channel numbers (CHNs) with mobile terminal identities (MS-IDs).

The SN 103 includes a processor 103a, which further includes a receiving unit 103b, storing unit 103c, sending unit 103d, and respective first and second calculating units (103e, 103f). The first calculating unit 103e calculates the TDOA of the signals received on the uplink by the radio base stations, wherein the first calculating unit 103e uses reported TOAs. The second calculating unit 103f calculates the position of mobile radio terminals using the TDOA information and (optionally) any reported DOA information available. The storing unit 103c maintains the known geographical locations of the radio base stations. The receiving unit 103b and sending unit 103d provide two-way communications with customers that request/receive position determination information (e.g., using short text messages such as the known Short Message Service messages).

Figure 1 also shows a mobile radio terminal (MS) 108 whose position is to be determined. The radio base stations BS1, BS2 and BS3 "listen" to the traffic channel of the MS 108 via uplink radio connections 105 received over the two receiving antennas 106 of each such BS. This two-antenna capability provides space diversity for the radio traffic and also for the position determination measurements being made in accordance with the present invention. Each radio base station (BS1, BS2, BS3) includes a control section 110, and a plurality of TXRXs 111 connected to the receiving antennas 106 via a splitter 112, and the transmitting antenna 107 via a combiner 113. Moreover, each such BS includes a time reference unit 114 that receives signals preferably from an accurate time reference, such as, for example, the space-based GPS 120. The time reference signal is coupled continuously from the time reference unit 114 to the ModRX module 130.

The BS of the present invention (e.g., BS1) includes a time reference unit 114 and control section 110, which is capable of serving more units in the BS than just the ModRX. Preferably, the ModRX 130 is located in a BS, but such a ModRX can also be a free-standing unit located remotely from the BS but connected to the control section 110 and time reference unit 114 of the BS. If a ModRX is located in a BS, the ModRx can share the BS's receiving antennas 106. However, if the ModRX is located remotely from the BS, the ModRX can include its own receiving antennas 106.

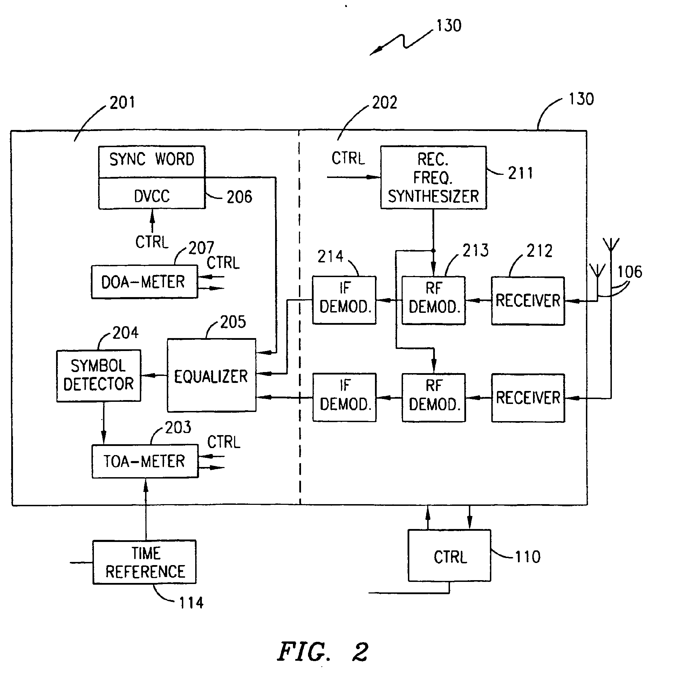

FIGURE 2 is a schematic block diagram that shows details of the ModRX 130 shown in FIGURE 1. In the preferred embodiment, the ModRX performs TOA measurements in a radio BS. In certain BSs, the ModRX can also include known DOA measurement equipment 207 to supplement the TOA measurements.

ModRX 130 comprises a metering section 201 and radio receiver section 202. The metering section 201 may be triplicated (not explicitly shown in FIGURE 2) for use in IS-54 and IS-136 systems, in order to handle the three full-rate time slots of a frame. Conversely, the radio receiver section 202 can be shared by the triplicated metering sections 201. If the ModRX 130 comprises a version used in a frequency-hopping system (e.g., GSM), the control section 110 preferably inputs the frequency-hopping sequences into the receiving frequency synthesizer 211, which enables position determinations to be made on frequency-hopping traffic channels. The radio receiver section 202 also includes receivers 212, RF demodulators 213, and IF demodulators 214 coupled to the two receiving antennas 106. More details about the GSM are provided in the GSM technical specification standardized by the European Telecommunication Standards Institute (ETSI), and the book entitled:"The GSM System for Mobile Communication," by Michel Mouly and Marie Bernadette Pautet (International Standard Book Number 2-9507190-0-7).

In FIGURE 2, the metering section 201 includes a TOA-meter 203, which receives a time reference signal from time reference unit 114, and the uplink signal on which to make the TOA measurements from symbol detector 204. Symbol detector 204 receives the input signal from equalizer 205 (or a correlator for analog channels). The sync-word and DVCC (Digital Verification Color Code) section 206 receives from control section 110 a number identifying the radio channel on which to measure the TOA. For example, in an IS-54 or IS-136 system, each BS in a cluster of BSs has a specific DVCC and seven different sync-words allowing it to synchronize on a particular time slot of a carrier frequency. This information is entered into the sync-word and DVCC section 206 from the control section 110, which in turn, receives the information from the MSC (102). The sync-word and DVCC section 206 couples this channel information to equalizer 205, in order to allow the equalizer to find the time slot (preferably using known correlation methods). Optionally, if the associated radio BS includes an array antenna system (corresponding to more than two antennas 106), the metering section 201 can include a DOA meter 207 connected only to control section 110. DOA meter 207 requests and receives from control section 110 the direction information available from the known beam-forming function in such a radio BS. Consequently, the DOA meter 207 is only relaying available information regarding the channel specified for position determination. When available, the DOA information can be utilized in the position determination algorithm in the SN to improve position determination accuracy, or enable position determinations to be made with less than three BSs involved. For example, when only the TOA and DOA from a single radio base station are available, the position of a mobile terminal can be determined where the straight line provided by the DOA intersects with the circle provided by the TOA measurements (radius equals speed of light multiplied by the propagation time of the signal from the mobile terminal to the BS).

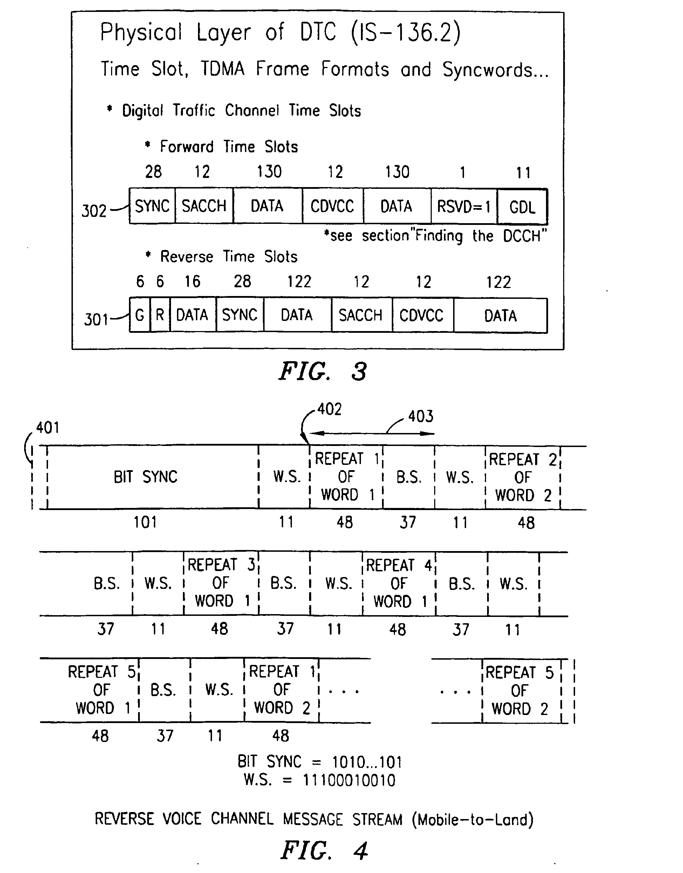

FIGURE 3 is a diagram that illustrates a format 301 for a reverse (uplink) time slot (under the IS-136 standard) on which TOA measurements are made, in accordance with the present invention. A forward (downlink) time slot format 302 is also shown, in order to demonstrate the different placement of the 28-bit sync-word. For the uplink, the sync-word which is used by the receiving correlator circuitry (not explicitly shown) to find the time slot is placed away from the beginning or end of the time slot. The reason for this placement is that the uplink timing of successive time slots on a carrier frequency is provided by different mobile radio terminals using different time slots on the same carrier. Consequently, there is a risk that uplink time slots can overlap each other when they arrive at a radio base station from different mobile radio terminals. The more or less centralized placement of the sync-word minimizes the chances of such overlap. This problem does not exist for the downlink. Nevertheless, should such an overlap occur on the uplink, it is important to save at least the sync-word from being disturbed.

FIGURE 4 is a diagram that illustrates a format 401 for a reverse (uplink) voice channel message stream under the IS-54 standard on which TOA measurements are made, in accordance with the present invention. The absolute TOA may refer to any agreed point in a message (e.g., the end of the first word sync 402). The equalizer 205 can be assisted by time diversity to find the agreed point in a message, by looking at several word syncs in a message and correcting with the nominal delay 403 in time. For example, this capability is valuable when the agreed point 402 in a message is disturbed by fading. Analog voice channels do not contain a digital time reference and, therefore, it is necessary to cause the mobile terminal to send an uplink message on the voice channel (e.g., in response to an audit order on the downlink).

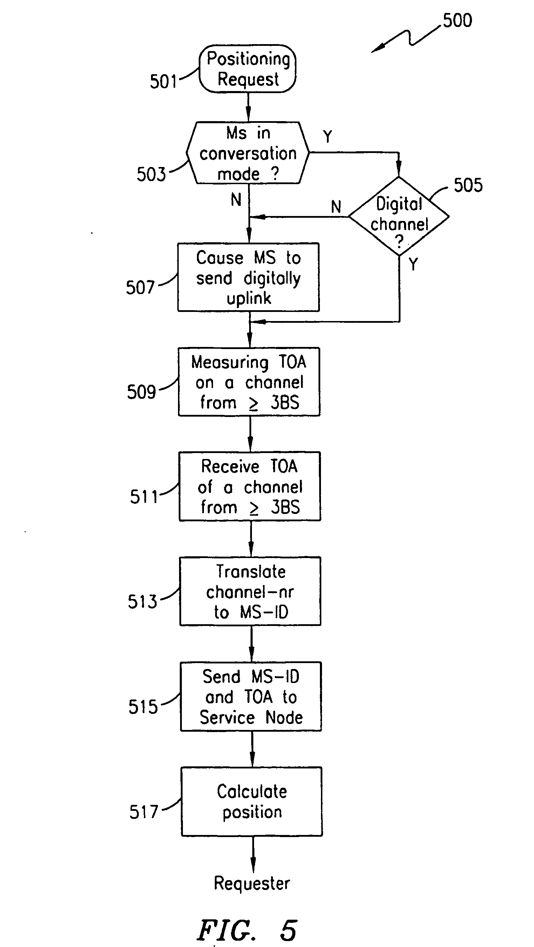

FIGURE 5 is a flow chart that illustrates a position determination method 500 that can be used in conjunction with the system 100 shown in FIGURE 1, in accordance with the present invention. Referring to FIGUREs 1 and 5, when a position determination request comes in to the SN 103 (step 501), at step 503, a determination is made about whether the mobile terminal 108 to be positioned is in a conversation mode, by requesting MSC 102 via trunks 104 to set up a call to the mobile terminal. If the mobile terminal 108 is idle, the call is set up at step 507. If, at step 503, the mobile terminal is already in a conversation mode, at step 505, a determination is then made about whether the traffic channel being used is a digital traffic channel. If not (i.e., the traffic channel is analog), an audit message is sent from MSC 102 to the mobile terminal 108 in order for the mobile terminal to receive an uplink response in digital form (e.g., based on the format shown in FIGURE 4). Otherwise, at step 505, if the traffic channel is digital, an audit message is not required. At step 509, the MSC 102 determines which (e.g., three) BSs are to take part in the position determination process and requests TOA measurements from at least three specified radio base stations, such as BS1, BS2 and BS3 via connections 101 and indicating the traffic channel number concerned. The control section 110 in each of the three BSs requests the ModRX 130 to determine the position of a mobile radio terminal on the specified channel. At step 511, the three BSs perform measurements in accordance with a known TOA measurement method and report the resulting measurement information to the MSC 102 together with the associated channel number (CHN). At step 513, the MSC 102 translates the CHN to a mobile radio terminal identity (MS-ID) making use of look up table 109 in the MSC. At step 515, the MSC sends the measurements from radio base stations BS1, BS2 and BS3 together with the MS-ID to the SN 103. At step 517. the SN 103 calculates the position of the mobile terminal 108, in accordance with a known triangulation algorithm. The resulting position information is conveyed to the position determination system customer who requested the position of the mobile terminal involved.

In a different embodiment of the present invention, a slight modification in the flow diagram of FIGURE 5 can include a handoff step before performing the TOA measurements at step 509, in order to avoid overlaps of neighboring time slots and disturbance of the TOA measurements when distant radio BSs are participating in the position determinations.

In yet another embodiment of the present invention, another slight modification in the flow diagram of FIGURE 5 can include a step for ordering more than one TOA measurement from a radio base station when that radio base station has a plurality (e.g., several) ModRXs connected to it, but those ModRXs are installed at different remote locations.

In still another embodiment of the present invention, another slight modification in the flow diagram of FIGURE 5 can include substitution, at step 509, of the method "measure TOA and DOA on a channel from more than or equal one BS" instead of "measuring TOA on a channel from ≥ 3 BS" as shown, when there are BSs, which are capable of determining DOA, in the radio coverage of the MS. In that case, steps 511-517 will also include the handling of DOA measurements.

In still another embodiment of the present invention, another slight modification in the flow diagram of FIGURE 5 can include steps for repeating the position determining steps 503-509 if, at step 509, it is determined that the uplink signal on the designated traffic channel is too weak to perform TOA measurements in some BSs. In this case, a step is added whereby the transmitting power of the MS is increased (or the signal-to-noise ratio is improved) before step 503 is repeated, either by performing an inter-BS handoff to a more distant serving BS, or by performing an intra-BS handoff to a traffic channel that is less disturbed by interference in a measuring BS, or preferably by directly ordering the MS to increase its transmitting power.

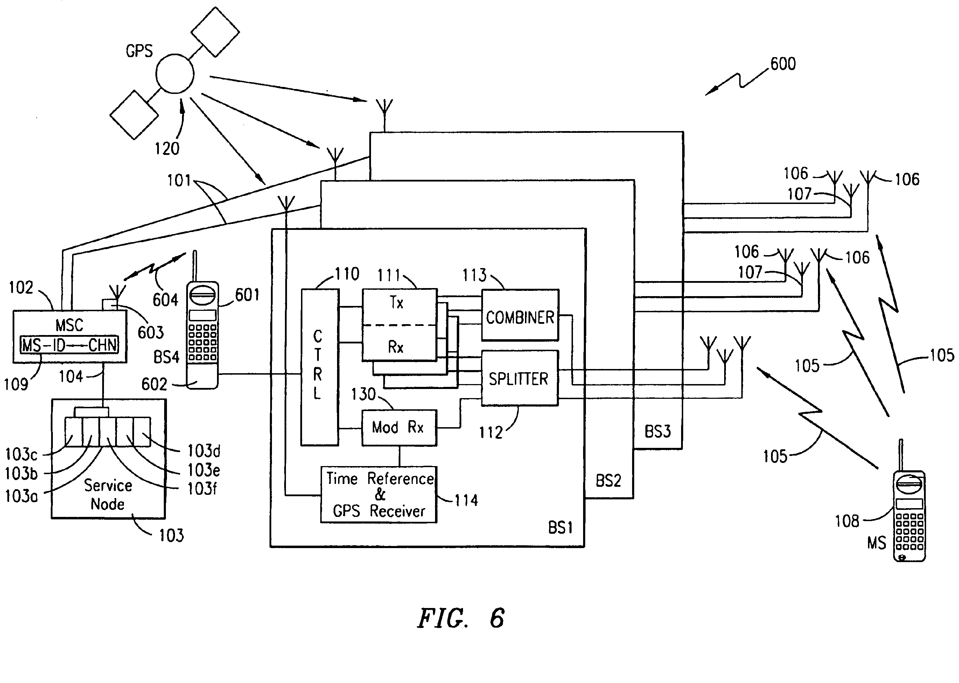

FIGURE 6 is a schematic block diagram that shows a cellular mobile radio system 600 with an integrated position determination function in accordance with the preferred embodiment shown in FIGURE 1, but modified to implement the novel concept of "cascaded position determination". Referring to FIGUREs 1 and 6, in addition to the elements shown in and described above with respect to FIGURE 1, system 600 includes at least one standard MS 601. MS 601 is preferably hard-wire connected via an accessory unit 602 to BS1. The MS (terminal) 601 communicates with the MSC 102 via a radio base station BS4 (603) over a radio air interface 604. In the embodiment shown in FIGURE 6, the radio base station BS4 (603) and radio air interface 604 (mobile connection) are substituted for the fixed connection 101 (shown in FIGURE 1) between the BS1 and the MSC 102. Consequently, the use of a mobile connection (e.g., BS4 and air interface 604) such as the exemplary mobile connection shown in FIGURE 6, makes it possible to locate BS1 (or BS2 or BS3) in a moving vehicle (e.g., ambulance, police patrol car, military vehicle, etc.) and dynamically improves the position determination accuracy by moving one or more BSs (e.g., BS1, BS2, BS3, etc.) relatively close to the region of interest (e.g., relatively close to a person in distress carrying MS 108). If there is only one fixed BS in the region of interest, it may be difficult to determine the position of the motor vehicle and also of the MS 108. As shown in FIGURE 6 in accordance with the present invention, the vehicle can include in the time reference unit 114, a "GPS receiver" in addition to a "time reference" controlled from the GPS. Consequently, the vehicle can report its position via MS 601 in those cases where the use of the internal GPS receiver is of advantage.

In operation, the method shown above and described with respect to FIGURE 5 can also be used to determine and report the position of the mobile station 601 and thus the motor vehicle carrying the BS (e.g., BS 1, BS2 or BS3). Preferably, in order to minimize signal interference for the embodiment shown in FIGURE 6, the TOA/DOA measurements made by the mobile radio BS (e.g., BS1, BS2 or BS3) do not overlap in time with either the TOA/DOA measurements of the fixed radio base station BS4 (603) that is determining the position of the motor vehicle, or the report being transmitted over the mobile connection (air interface 604 and BS4 (603)).

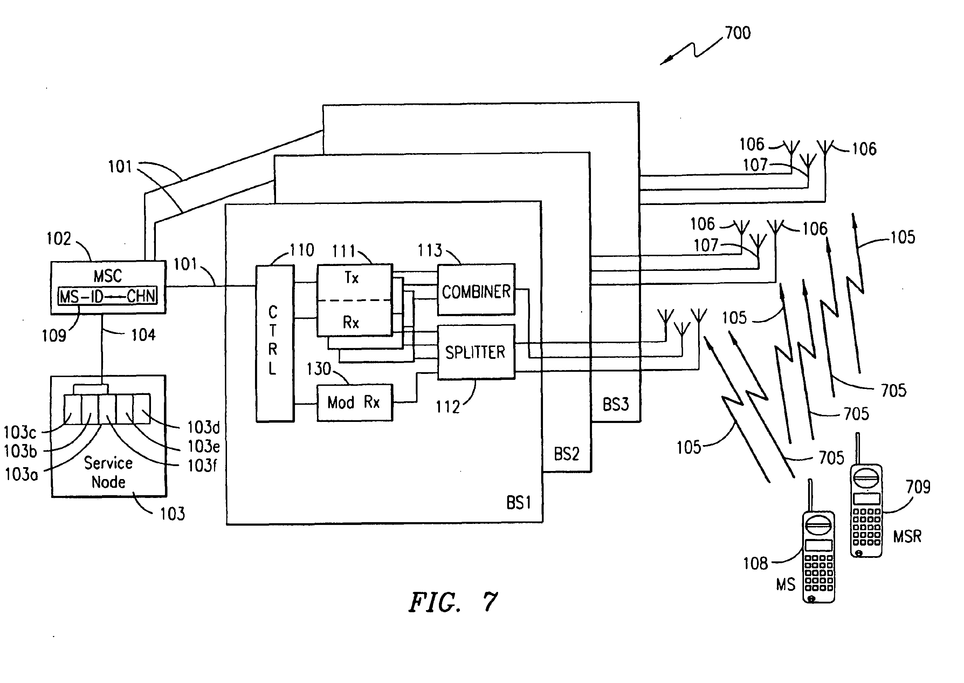

FIGURE 7 is a schematic block diagram that shows a cellular mobile radio system 700 in accordance with the preferred embodiment shown in FIGURE 1, but modified to use at least one reference mobile station (MSR) 709 instead of the GPS 120 and time reference 114 (FIGURE 1). Referring to FIGUREs 1 and 7, in addition to the elements shown in and described above with respect to FIGURE 1, system 700 includes the MSR 709 having a known position relative to the radio base stations BS 1, BS2 and BS3. The base stations BS1, BS2 and BS3 are operable to receive uplink radio connections 705 transmitted from the MSR 709. More specifically, the MSR 709 transmits a relative time reference or "time blip" to each base station BS1, BS2 and BS3, where the "time blip" can consist, for example, of the beginning of a particular frame.

In response to receiving the relative time reference or "time blip", each ModRX 130 in base stations BS1, BS2 and BS3 determines the corresponding TOA of the "time blip". And, each TOA is then corrected in view of the known distance between the MSR 709 and the respective base stations BS 1, BS2 or BS3.

Thereafter, each ModRX 130 determines a TOA associated with the MS 108, where the TOA is measured relative to the corresponding "time blip". The measured TOAs (e.g., MSRs and MSs) are then transmitted to the service node 103 which implements a known hyperbola position determination algorithm to ascertain the geographical position of MS 108.

In addition, the MSR 709 can also be located within one of the base stations (e.g., BS2) in which the location of the MSR 709 would be known. In such a situation, a second MSR (not shown) would be required in the system 700 to obtain the necessary number of TOA measurements required to determine the position of the MS 108, because each base station BS1, BS2 and BS3 should receive at least one "time blip" from the MSRs 709 in order to determine the necessary TOAs. It is possible to locate the second MSR (not shown) at one of the other base stations (e.g., BS) or BS3) so that the necessary TOAs are measured to be able to determine the position of MS 108.

Although a preferred embodiment of the method and apparatus of the present invention has been illustrated in the accompanying Drawings and described in the foregoing Detailed Description, it will be understood that the invention is not limited to the embodiment disclosed, but is capable of numerous rearrangements, modifications and substitutions without departing from the scope of the invention as set forth and defined by the following claims.

## Claims

1. A method for determining the geographical position of a first mobile radio terminal (108) in a mobile radio system, said mobile radio system including a network controller (102) and at least two radio base stations (BS1, BS2) each including at least one uplink TOA measuring unit (130) each located at a different location with respect to one another and each operable to communicate with said network controller (102), a control unit (110) and a time reference unit (114) operable to provide timing reference signals to said uplink TOA measuring units (130), at least one of said at least two radio base stations (BS1, BS2) collocated with and connected to a second mobile radio terminal (601), said second mobile radio terminal (601) coupled to said network controller (102) via a radio air interface, and a service node (103) operable to store known positions of at least two of said uplink TOA measuring units (130), the method comprising the steps of:
receiving a request in said mobile radio system to determine the geographical position of said first mobile radio terminal (108) ;
determining and reporting the position of said second mobile radio terminal (601) to said service node (103);
directing said first mobile radio terminal (108) to transmit digital signals uplink on the traffic channel when said first mobile terminal (108) is not transmitting or transmitting only analog signals;
measuring in each uplink TOA measuring unit (130) an uplink TOA measurement of the digital signals transmitted by the first mobile radio terminal (108);
receiving in said network controller said uplink TOA measurement from each uplink TOA measuring unit (130) and a traffic channel number to said traffic channel;
translating said traffic channel number to an identity of said first mobile radio terminal (108);
conveying said uplink TOA measurements and said first mobile radio terminal (108) identity to said service node (103); and
calculating in said service node (103) the position of said first mobile radio terminal (108) using said known positions of said plurality of uplink TOA measuring units (130) and said uplink TOA measurements.

2. The method according to Claim 1, further comprising the step of said network controller directing said first mobile radio terminal (108) to increase transmission power during said uplink TOA measurements.

3. The method according to Claim 1, further comprising the step of inter-base handing off said mobile radio terminal (108) to a more distant serving base station.

4. The method according to Claim 1, further comprising the step of intra-base station handing off said mobile radio terminal (108) to a second traffic channel if, in a distant base station performing a TOA measurement, a signal-to-noise ratio of said traffic channel is less than a predetermined value, said second traffic channel having a signal-to-noise ratio greater than said predetermined value.

5. The method according to Claim 1, wherein said directing step comprises setting up a call to said first mobile radio terminal (108).

6. The method according to Claim 1, wherein said directing step comprises activating said first mobile radio terminal (108) to transmit if said first mobile radio terminal (108) is a discontinuous transmission type and inactive.

7. The method according to Claim 1, wherein said directing step comprises conveying information to an analog mobile radio terminal, said information directing said analog mobile radio terminal to respond uplink with digital information.

8. The method according to Claim 1, wherein said directing step comprises conveying information to a packet terminal, said information directing said packet terminal to respond uplink.

9. The method according to Claim 1, wherein said uplink TOA measuring unit (130) comprises a modified receiver.

10. The method according to Claim 1, comprising a further step of determining and reporting the position of said second mobile radio terminal to said service node; said step comprising determining the position of said second mobile radio terminal (601) using GPS position information, and reporting said position of said second mobile radio terminal (601) to said service node.

11. The method according to Claim 10, wherein said determining and reporting step comprises determining the position of said second mobile radio terminal (601) using predetermined position information, and reporting said position of said second mobile radio terminal to said service node.

12. Measuring equipment for use in a mobile radio system including apparatus for position determination measurements (130), said measuring equipment connected to a network controller (102), a time reference unit (114), and at least one receiving antenna, comprising:
first means for measuring TOA, said first means coupled to said time reference;
second means for conveying said first means digital uplink information from a channel to be measured, and using correlation with non-variable traffic channel information for determining TOA;
at least one radio receiver, said at least one radio receiver including at least one demodulator;
a receiving frequency synthesizer operable to couple to said at least one demodulator a frequency that enables position determination measurements on a specific traffic channel; and
means for receiving and storing frequency hopping sequences to enable a TOA measurement on frequency hopping traffic channels.

13. The measuring equipment according to Claim 12, integrated into a radio base station.

14. The measuring equipment according to Claim 12, free-standing and remotely located in relation to a radio base station to which said measuring equipment is connected.

15. A base station comprising the measuring equipment according to Claim 12, and further comprising at least one TOA meter (130) for measuring TOA on traffic channels, said at least one TOA meter operable to communicate with a network controller (102) of said radio base station and synchronize with a TOA meter of at least a second radio base station, and wherein a plurality of transmitter-receivers of said first radio base station (108) is not synchronized with a plurality of transmitter-receivers of said at least a second radio base station.

16. A network controller (102) for determining a position of a mobile radio terminal (108), comprising:
means for directing plurality of radio base stations (BS1, BS2, BS3) to perform TOA measurements on a specified traffic channel;
means for translating a channel identity to an identity of said mobile radio terminal (108) ; and
means for conveying said TOA measurements and said identity of said mobile radio terminal (108) to a service node (103) for use in calculating said position of said mobile radio terminal (108).

17. A service node (103) for use in calculating mobile terminal position information in a cellular mobile radio network, comprising:
means for receiving position information requests;
means for requesting a mobile radio terminal to transmit digital signals uplink on a traffic channel if said mobile radio terminal is transmitting either analog signals or no signals;
means for storing known radio base station position information for use in said calculating said mobile terminal position information;
means for receiving TOA measurements from a network controller; and
means for calculating said mobile terminal position information using TOA information associated with said mobile terminal, and said known radio base station position information.

18. A mobile radio system capable of determining a geographical position of a mobile radio terminal (108) located in said mobile radio system, comprising:
a network controller (102),
a radio base station (BS1) including a plurality of uplink TOA measuring units (130) each located at a different location with respect to one another and each operable to communicate with said network controller (102), and a time reference unit operable to provide timing signals to each uplink TOA measuring unit;
mobile unit comprising a base station collocated to a second mobile radio terminal, said second mobile radio terminal being coupled to the network controller via a radio air interface; and
a service node (103) operable to store known positions of said plurality of uplink TOA measuring units (130), said mobile radio system operable to determine said geographical position of said mobile radio terminal (108), by receiving a request to determine said geographical position of said mobile radio terminal (108), directing said mobile radio terminal (108) to transmit digital signals uplink on a traffic channel if said mobile radio terminal is transmitting analog signals or no signals, measuring TOA information on said traffic channel in each uplink TOA measuring unit (130) receiving from each uplink TOA measuring unit (130) said TOA measurement information in said network controller and a reference to said traffic channel, translating an identity of said traffic channel to an identity of said mobile radio terminal (108), conveying said uplink TOA measurement information and identity to said service node (103), and calculating in said service node (103) the geographical position of said mobile radio terminal (108) using said known position information of said plurality of uplink TOA measuring units (130) and said uplink TOA measurement information.

19. The mobile radio system according to Claim 18, wherein said directing operation comprises setting up a call to said mobile radio terminal (108).

20. The mobile radio system according to Claim 18, wherein said directing operation comprises activating said mobile radio terminal (108) to transmit if said mobile radio terminal (108) is inactive and a discontinuous transmission type.

21. The mobile radio system according to Claim 18, wherein said directing operation comprises conveying information to an analog mobile radio terminal that directs said mobile radio terminal to respond on said uplink with digital information.

22. The mobile radio system according to Claim 18, wherein said directing operation comprises conveying information to a packet terminal that directs said packet terminal to respond on said uplink.

23. The mobile radio system according to Claim 18, wherein said uplink TOA measuring equipment includes a DOA meter.

24. A mobile unit for use in determining a position of a second mobile radio terminal (108), comprising:
a radio base station (BS1) according to Claim 15 connected to a first mobile radio terminal (601);
means for receiving an order to measure uplink time of arrival of signals transmitted by said second mobile radio terminal (108) on a specified traffic channel;
means for determining and reporting a position of said first mobile radio terminal (601) ; and
means for measuring and reporting said uplink time of arrival of said signals transmitted by said second mobile radio terminal (108).

25. The mobile unit according to Claim 24, wherein said means for determining comprises a GPS receiver.

26. The mobile unit according to Claim 24, wherein said means for determining includes having predetermined knowledge of a location of said first mobile radio terminal and manually reporting said location.

## Patentansprüche

1. Verfahren zum Bestimmen der geographischen Position eines ersten Mobilfunkendgerätes (108) in einem Mobilfunksystem, wobei das Mobilfunksystem ein Netzwerksteuergerät (102) und zumindest zwei Funkbasisstationen (BS1, BS2) umfasst, von denen jede zumindest eine Uplink-TOA-Messeinheit (130) umfasst, von denen jede an einem unterschiedlichen Ort in Bezug zueinander lokalisiert ist und jede betriebsfähig ist, mit dem Netzwerksteuergerät (102) zu kommunizieren, eine Steuereinheit (110) und eine Zeitreferenz-Einheit (114), die betriebsfähig sind, Zeitsteuer-Referenzsignale an die Uplink-TOA-Messeinheiten (130) (Uplink: Anbindung nach oben) bereitzustellen, wobei zumindest eine der zumindest zwei Funkbasisstationen (BS1, BS2) zusammen mit einem zweiten Mobilfunkendgerät (601) aufgestellt und verbunden ist, wobei das zweite Mobilfunkendgerät (601) mit dem Netzwerksteuergerät (102) über eine Funk-Luftschnittstelle gekoppelt ist, und ein Dienst-Knoten (103) betriebsfähig ist, bekannte Positionen von zumindest zwei der Uplink-TOA-Messeinheiten (130) zu speichern, wobei das Verfahren die Schritte umfasst:
Empfangen einer Anforderung in dem Mobilfunksystem, um die geographische Position des ersten Mobilfunkendgeräts (108) zu bestimmen;
Bestimmen und Melden der Position des zweiten Mobilfunkendgerätes (601) an den Dienst-Knoten (103);
Anweisen des ersten Mobilfunkendgerätes (108), digitale Signale in Uplink-Richtung auf dem Verkehrssignal zu übertragen, wenn das erste mobile Endgerät (108) nicht überträgt oder lediglich analoge Signale überträgt;
Messen in jeder Uplink-TOA-Messeinheit (130) einer Uplink-TOA-Messung der digitalen Signale, die von dem ersten Mobilfunkendgerät (108) übertragen werden;
Empfangen in dem Netzwerksteuergerät der Uplink-TOA-Messung von jeder Uplink-TOA-Messeinheit (130) und einer Verkehrskanalnummer an den Verkehrskanal;
Übersetzen der Verkehrskanalnummer in eine Identität des ersten Mobilfunkendgerätes (108);
Befördern der Uplink-TOA-Messungen und der ersten Mobilfunkendgerät-(108)-Identität an den Dienstknoten (103); und
Berechnen in dem Dienst-Knoten (103) der Position des ersten Mobilfunkendgerätes (108) unter Verwendung der bekannten Positionen der Vielzahl von Uplink-TOA-Messeinheiten (130) und der Uplink-TOA-Messungen.

2. Verfahren nach Anspruch 1, weiter mit dem Schritt des Netzwerksteuergerätes des Anweisens des ersten Mobilfunkendgeräts (108), die Übertragungsleistung während den Uplink-TOA-Messungen zu erhöhen.

3. Verfahren nach Anspruch 1, weiter mit dem Schritt des Inter-Basis-Übergebens des Mobilfunkendgerätes (108) zu einer weiter entfernt gelegenen, bedienenden Basisstation.

4. Verfahren nach Anspruch 1, weiter mit dem Schritt des Intra-Basisstation-Übergebens des Mobilfunkendgerätes (108) an einen zweiten Verkehrskanal, falls in einer entfernt gelegenen Basisstation, die eine TOA-Messung durchführt, ein Signal-zu-Rauschverhältnis des Verkehrskanals weniger als ein zuvor bestimmter Wert ist, wobei der zweite Verkehrskanal ein Signal-zu-Rauschverhältnis aufweist, das größer als ein zuvor bestimmter Wert ist.

5. Verfahren nach Anspruch 1, wobei der Anweise-Schritt das Aufbauen eines Anrufs an das erste Mobilfunkendgerät (108) umfasst.

6. Verfahren nach Anspruch 1, wobei der Anweise-Schritt das Aktivieren des ersten Mobilfunkendgerätes (108) umfasst, um zu übertragen, falls das erste Mobilfunkendgerät (108) ein diskontinuierlicher Übertragungstyp und inaktiv ist.

7. Verfahren nach Anspruch 1, wobei der Anweise-Schritt ein Befördern von Information zu einem analogen Mobilfunkengerät umfasst, wobei die Information das analoge Mobilfunkengerät anweist, in Uplink-Richtung mit digitaler Information zu antworten.

8. Verfahren nach Anspruch 1, wobei der Anweise-Schritt ein Befördern von Information zu einem Paket-Endgerät umfasst, wobei die Information das Paket-Endgerät anweist in Uplink-Richtung zu antworten.

9. Verfahren nach Anspruch 1, wobei die Uplink-TOA-Messeinheit (130) einen modifizierten Empfänger umfasst.

10. Verfahren nach Anspruch 1, mit einem weiteren Schritt des Bestimmens und Meldens der Position des zweiten Mobilfunkendgerätes an den Dienst-Knoten; wobei der Schritt ein Bestimmen der Position des zweiten Mobilfunkendgerätes (601) unter Verwendung von GPS-Positionsinformation und Melden der Position des zweiten Mobilfunkendgerätes (601) an den Dienst-Knoten umfasst.

11. Verfahren nach Anspruch 10, wobei der Bestimm- und Melde-Schritt ein Bestimmen der Position des zweiten Mobilfunkendgerätes (601) unter Verwendung zuvor bestimmter Positionsinformation und Melden der Position des zweiten Mobilfunkendgerätes (601) an den Dienst-Knoten umfasst.

12. Messausrüstung zur Verwendung in einem Mobilfunksystem einschließlich eines Gerätes für Positionsbestimmungsmessungen (130), wobei die Messausrüstung mit einem Netzwerksteuergerät (102), einer Zeitreferenzeinheit (114) und zumindest einer Empfangsantenne verbunden ist, mit:
einer ersten Vorrichtung zum Messen einer TOA, wobei die erste Vorrichtung mit der Zeitreferenz gekoppelt ist;
einer zweiten Vorrichtung zum Befördern der digitalen Uplink-Information der ersten Vorrichtung von einem zu messenden Kanal und zum Verwenden einer Korrelation mit nicht-variabler Verkehrskanalinformation zum Bestimmen einer TOA;
zumindest einem Funkempfänger, wobei der zumindest eine Funkempfänger zumindest einen Demodulator umfasst;
einem Empfangsfrequenzsynthesizer, der betriebsfähig ist, mit dem zumindest einen Demodulator eine Frequenz zu koppeln, die Positionsbestimmungsmessungen auf einem spezifischen Verkehrskanal ermöglicht; und
einer Vorrichtung zum Empfangen und Speichern von Frequenzsprungsequenzen, um eine TOA-Messung auf Frequenzsprungverkehrskanälen zu ermöglichen.

13. Messausrüstung nach Anspruch 12, die in eine Funkbasisstation integriert ist.

14. Messausrüstung nach Anspruch 12, die frei steht und entfernt gelegen in Bezug auf eine Funkbasisstation ist, mit der die Messausrüstung verbunden ist.

15. Basisstation mit der Messausrüstung nach Anspruch 12 und weiter mit zumindest einem TOA-Messgerät (130) zum Messen von TOA auf Verkehrskanälen, wobei zumindest ein TOA-Messgerät betriebsfähig ist, mit einem Netzwerksteuergerät (102) der Funkbasisstation zu kommunizieren und mit einem TOA-Messgerät von zumindest einer zweiten Funkbasisstation synchron zu laufen, und wobei eine Vielzahl von Sende-Empfängern der ersten Funkbasisstation (108) nicht mit einer Vielzahl von Sende-Empfängern von zumindest einer zweiten Funkbasisstation (108) synchron läuft.

16. Netzwerksteuergerät (102) zum Bestimmen einer Position eines Mobilfunkgerätes (108), mit:
einer Vorrichtung zum Anweisen der Vielzahl von Funkbasisstationen (BS1, BS2, BS3), TOA-Messungen auf einem spezifizierten Verkehrskanal durchzuführen;
einer Vorrichtung zum Übersetzen einer Kanalidentität in eine Identität des Mobilfunkendgerätes (108), und
einer Vorrichtung zum Befördern der TOA-Messungen und der Identität des Mobilfunkendgerätes (108) zu einem Dienst-Knoten (103) zur Verwendung beim Berechnen der Position des Mobilfunkendgerätes (108).

17. Dienst-Knoten (103) zur Verwendung beim Berechnen einer Mobilfunkengerätpositionsinformation in einem zellularen Mobilfunknetzwerk, mit:
einer Vorrichtung zum Empfangen von Positionsinformationsanfragen;
einer Vorrichtung zum Anfordern eines Mobilfunkendgeräts digitale Signale in Uplink-Richtung auf dem Verkehrssignal zu übertragen, falls das Mobilfunkendgerät (108) entweder analoge Signale oder keine Signale überträgt;
einer Vorrichtung zum Speichern bekannter Funkbasisstationspositionsinformation zur Verwendung beim Berechnen der mobilen Endgerätpositionsinformation;
einer Vorrichtung zum Empfangen von TOA-Messungen von einem Netzwerksteuergerät; und
einer Vorrichtung zum Berechen der mobilen Endgerätpositionsinformation unter Verwendung von TOA-Information, die mit dem mobilen Endgerät verknüpft ist, und bekannter Funkbasisstationspositionsinformation.

18. Mobilfunksystem, das in der Lage ist, die geographische Position eines Mobilfunkendgerätes (108) zu bestimmen, das in dem Mobilfunksystem lokalisiert ist, mit:
einem Netzwerksteuergerät (102),
einer Funkbasisstationen (BS1), die eine Vielzahl von Uplink-TOA-Messeinheiten (130) umfasst, von denen jede an einem unterschiedlichen Ort in Bezug zueinander lokalisiert ist und jede betriebsfähig ist, mit dem Netzwerksteuergerät (102) zu kommunizieren, und eine Zeitreferenz-Einheit (114), die betriebsfähig ist, Zeitsteuer-Signale an jede Uplink-TOA-Messeinheit bereitzustellen;
einer mobilen Einheit mit einer Basisstation, die zusammen mit einem zweiten Mobilfunkendgerät aufgestellt ist, wobei das zweite Mobilfunkendgerät mit dem Netzwerksteuergerät über eine Funk-Luftschnittstelle gekoppelt ist; und
einem Dienst-Knoten (103), der betriebsfähig ist, bekannte Positionen der Vielzahl von Uplink-TOA-Messeinheiten (130) zu speichern, wobei das Mobilfunksystem betriebsfähig ist, die geographische Position des Mobilfunkendgerätes (108) zu bestimmen, durch
Empfangen einer Anforderung, um die geographische Position des Mobilfunkendgerät (108) zu bestimmen;
Anweisen des Mobilfunkendgerätes (108), digitale Signale in Uplink-Richtung auf dem Verkehrssignal zu übertragen, falls das Mobilfunkendgerät (108) analoge Signale oder keine Signale überträgt;
Messen von TOA-Information auf jedem Verkehrskanal in jeder Uplink-TOA-Messeinheit (130),
Empfangen der TOA-Messungsinformation von jeder Uplink-TOA-Messeinheit (130) in dem Netzwerksteuergerät und einer Referenz zu dem Verkehrskanal;
Übersetzen einer Identität des Verkehrskanals in eine Identität des Mobilfunkendgeräts (108),
Befördern der Uplink-TOA-Messungsinformation und der Identität an den Dienstknoten (103); und
Berechnen in dem Dienst-Knoten (103) der geographischen Position des Mobilfunkendgerätes (108) unter Verwendung der bekannten Positionsinformation der Vielzahl von Uplink-TOA-Messeinheiten (130) und der Uplink-TOA-Messungsinformation.

19. Mobilfunksystem nach Anspruch 18, wobei der Anweise-Betrieb das Aufbauen eines Anrufs an das Mobilfunkendgerät (108) umfasst.

20. Mobilfunksystem nach Anspruch 18, wobei der Anweise-Betrieb das Aktivieren des Mobilfunkendgerätes (108) umfasst, um zu übertragen, falls das erste Mobilfunkendgerät (108) inaktiv und ein diskontinuierlicher Übertragungstyp ist.

21. Mobilfunksystem nach Anspruch 18, wobei der Anweise-Betrieb ein Befördern von Information zu einem analogen Mobilfunkengerät umfasst, die das Mobilfunkengerät anweist, in Uplink-Richtung mit digitaler Information zu antworten.

22. Mobilfunksystem nach Anspruch 18, wobei der Anweise-Betrieb ein Befördern von Information an ein Paket-Endgerät umfasst, die das Paket-Endgerät anweist, in der Uplink-Richtung zu antworten.

23. Mobilfunksystem nach Anspruch 18, wobei die Uplink-TOA-Messausrüstung ein DOA-Messgerät umfasst.

24. Mobile Einheit zur Verwendung beim Bestimmen einer Position eines zweiten Mobilfunkendgerätes (108), mit:
einer Funkbasisstation (BS1) nach Anspruch 15, die mit einem ersten Mobilfunkendgerät (601) verbunden ist
einer Vorrichtung zum Empfangen einer Anweisung, die Uplink-Ankunftszeit von Signalen zu messen, die von dem zweiten Mobilfunkendgerät (108) auf einem spezifizierten Verkehrskanal übertragen werden;
einer Vorrichtung zum Bestimmen und Melden einer Position des ersten Mobilfunkendgerätes (601); und
einer Vorrichtung zum Messen und Melden der Uplink-Ankunftszeit der Signale, die von dem zweiten Mobilfunkendgerät (108) übertragen werden.

25. Mobile Einheit nach Anspruch 24, wobei die Vorrichtung zum Bestimmen einen GPS-Empfänger umfasst.

26. Mobile Einheit nach Anspruch 24, wobei die Vorrichtung zum Bestimmen ein Aufweisen einer zuvor bestimmten Kenntnis eines Ortes des ersten Mobilfunkendgerätes und ein manuelles Melden des Ortes umfasst.

## Revendications

1. Procédé de détermination de la position géographique d'un premier terminal radio mobile (108), dans un système radio mobile, ledit système radio mobile comprenant un contrôleur de réseau (102) et au moins deux stations de base radio (BS1, BS2), chacune comprenant au moins une unité de mesure des instants d'arrivée sur une liaison montante (130), chacune étant implantée à un endroit différent par rapport aux autres et chacune étant en mesure de communiquer avec ledit contrôleur de réseau (102), une unité de commande (110) et une unité de référence de temps (114) en mesure de fournir des signaux de référence de temps auxdites unités de mesure des instants d'arrivée sur une liaison montante (130), au moins l'une desdites au moins deux stations de base radio (BS1, BS2) étant implantée au même lieu qu'un second terminal radio mobile (601) et connectée à celui-ci, ledit second terminal radio mobile (601) étant couplé audit contrôleur de réseau (102) par une interface radio, et un noeud de service (103) en mesure de stocker des positions connues d'au moins deux desdites unités de mesure des instants d'arrivée sur une liaison montante (130), le procédé comprenant les étapes consistant à :
recevoir dans ledit système radio mobile une demande de détermination de la position géographique dudit premier terminal radio mobile (108) ;
déterminer et renvoyer la position dudit second terminal radio mobile (601) audit noeud de service (103) ;
ordonner audit premier terminal radio mobile (108) d'émettre des signaux numériques montants sur le canal de trafic, lorsque ledit premier terminal radio mobile (108) n'émet pas ou bien n'émet que des signaux analogiques ;
mesurer, dans chaque unité de mesure des instants d'arrivée sur une liaison montante (130), un instant d'arrivée sur la liaison montante des signaux numériques émis par le premier terminal radio mobile (108) ;
recevoir sur ledit contrôleur de réseau lesdites mesures des instants d'arrivée sur la liaison montante de chaque unité de mesure des instants d'arrivée sur une liaison montante (130) et un numéro de canal de trafic sur ledit canal de trafic ;
traduire ledit numéro de canal de trafic en une identité dudit premier terminal radio mobile (108) ;
envoyer lesdites mesures des instants d'arrivée sur la liaison montante et ladite identité du premier terminal radio mobile (108) vers ledit noeud de service (103) ; et
calculer dans ledit noeud de service (103) la position dudit premier terminal radio mobile (108) en utilisant lesdites positions connues de ladite pluralité d'unités de mesure des instants d'arrivée sur une liaison montante (130) et lesdites mesures des instants d'arrivée sur la liaison montante.

2. Procédé selon la revendication 1, comprenant en outre l'étape où ledit contrôleur de réseau ordonne audit premier terminal radio mobile (108) d'augmenter la puissance d'émission pendant lesdites mesures des instants d'arrivée sur la liaison montante.

3. Procédé selon la revendication 1, comprenant en outre l'étape consistant à effectuer un transfert entre bases différentes, pour ledit terminal radio mobile (108), vers une station de base de desserte plus lointaine.

4. Procédé selon la revendication 1, comprenant en outre l'étape consistant à effectuer un transfert interne à la base, pour ledit terminal radio mobile (108), vers un second canal de trafic si, dans une station de base distante effectuant des mesures des instants d'arrivée, le rapport signal/bruit dudit canal de trafic est inférieur à une valeur prédéterminée, ledit second canal de trafic ayant un rapport signal/bruit supérieur à ladite valeur prédéterminée.

5. Procédé selon la revendication 1, dans lequel ladite étape consistant à ordonner comprend l'établissement d'un appel vers ledit premier terminal radio mobile (108).

6. Procédé selon la revendication 1, dans lequel ladite étape consistant à ordonner comprend le fait d'activer l'émission par ledit premier terminal radio mobile (108) si ledit premier terminal radio mobile (108) est du type à émission discontinue et est inactif.

7. Procédé selon la revendication 1, dans lequel ladite étape consistant à ordonner comprend l'envoi d'informations à un terminal radio mobile analogique, lesdites informations ordonnant audit terminal radio mobile analogique de répondre sur la liaison montante avec des informations numériques.

8. Procédé selon la revendication 1, dans lequel ladite étape consistant à ordonner comprend l'envoi d'informations à un terminal par paquets, lesdites informations ordonnant audit terminal par paquets de répondre sur la liaison montante.

9. Procédé selon la revendication 1, dans lequel ladite unité de mesure des instants d'arrivée sur la liaison montante (130) comprend un récepteur modifié.

10. Procédé selon la revendication 1, comprenant en outre une étape consistant à déterminer et à renvoyer la position dudit second terminal radio mobile audit noeud de service ; ladite étape comprenant la détermination de la position dudit second terminal radio mobile (601) en utilisant des informations de position GPS et le renvoi de ladite position dudit second terminal radio mobile (601) audit noeud de service.

11. Procédé selon la revendication 10, dans lequel ladite étape de détermination et de renvoi comprend la détermination de la position dudit second terminal radio mobile (601) en utilisant des informations prédéterminées de position et le renvoi de ladite position dudit second terminal radio mobile (601) audit noeud de service.

12. Équipement de mesure, destiné à être utilisé dans un système radio mobile comprenant un appareil de mesures pour la détermination de la position (130), ledit équipement de mesure étant connecté à un contrôleur de réseau (102), à une unité de référence de temps (114) et à au moins une antenne de réception, comprenant :
un premier moyen destiné à mesurer l'instant d'arrivée, ledit premier moyen étant couplé à ladite référence de temps ;
un second moyen, destiné à envoyer audit premier moyen des informations montantes numériques provenant d'un canal à mesurer, et à utiliser la corrélation avec des informations non variables du canal de trafic pour déterminer l'instant d'arrivée ;
au moins un récepteur radio, ledit au moins un récepteur radio comprenant au moins un démodulateur ;
un synthétiseur de fréquence de réception, en mesure de coupler audit au moins un démodulateur une fréquence qui permet des mesures pour la détermination de la position sur un canal de trafic spécifique ; et
un moyen destiné à recevoir et à stocker des séquences de sauts de fréquences pour permettent une mesure de l'instant d'arrivée sur des canaux de trafic à sauts de fréquences.

13. Équipement de mesure selon la revendication 12, intégré dans une station de base radio.

14. Équipement de mesure selon la revendication 12, autonome et implanté à distance par rapport à une station de base radio à laquelle ledit équipement de mesure est connecté.

15. Station de base comprenant l'équipement de mesure selon la revendication 12 et comprenant en outre au moins un mesureur d'instants d'arrivée (130), destiné à mesurer les instants d'arrivée sur des canaux de trafic, ledit au moins un mesureur d'instants d'arrivée étant en mesure de communiquer avec un contrôleur de réseau (102) de ladite station de base radio et de se synchroniser avec un mesureur d'instants d'arrivée d'au moins une seconde station de base radio, et dans lequel une pluralité d'émetteurs-récepteurs de ladite première station de base radio (108) n'est pas synchronisée avec une pluralité d'émetteurs-récepteurs de ladite au moins une seconde station de base radio.

16. Contrôleur de réseau (102) destiné à déterminer une position d'un terminal radio mobile (108), comprenant :
un moyen destiné à ordonner à une pluralité de stations de base radio (BS1, BS2, BS3) de réaliser des mesures des instants d'arrivée sur un canal de trafic spécifié ;
un moyen destiné à traduire une identité de canal en une identité dudit terminal radio mobile (108) ; et
un moyen destiné à envoyer lesdites mesures des instants d'arrivée et ladite identité dudit terminal radio mobile (108) vers un noeud de service (103), pour être utilisées dans le calcul de ladite position dudit terminal radio mobile (108).

17. Noeud de service (103), destiné à être utilisé dans le calcul d'informations de position de terminaux mobiles, dans un réseau radio mobile cellulaire, comprenant :
un moyen destiné à recevoir des demandes d'informations de position ;
un moyen destiné à demander à un terminal radio mobile d'émettre des signaux numériques montants sur le canal de trafic si ledit premier terminal radio mobile soit émet des signaux analogiques, soit n'émet aucun signal ;
un moyen destiné à stocker les informations connues de position de station de base radio, destinées à être utilisées dans ledit calcul desdites informations de position du terminal mobile ;
un moyen destiné à recevoir des mesures des instants d'arrivée d'un contrôleur de réseau ; et
un moyen destiné à calculer lesdites informations de position de terminal mobile en utilisant des informations d'instant d'arrivée associées audit terminal mobile et lesdites informations connues de position de station de base radio.

18. Système radio mobile en mesure de déterminer une position géographique d'un terminal radio mobile (108) situé dans ledit système radio mobile, comprenant :
un contrôleur de réseau (102),
une station de base radio (BS1), comprenant une pluralité d'unités de mesure des instants d'arrivée sur une liaison montante (130), chacune étant implantée à un endroit différent par rapport aux autres et chacune étant en mesure de communiquer avec ledit contrôleur de réseau (102), et une unité de référence de temps en mesure de fournir des signaux de synchronisation à chaque unité de mesure des instants d'arrivée sur une liaison montante ;
une unité mobile comprenant une station de base implantée au même lieu qu'un second terminal radio mobile, ledit second terminal radio mobile étant relié au contrôleur de réseau par une interface air radio ; et
un noeud de service (103), en mesure de stocker des positions connues de ladite pluralité d'unités de mesure des instants d'arrivée sur une liaison montante (130),
ledit système radio mobile étant en mesure de déterminer ladite position géographique dudit terminal radio mobile (108) en recevant une demande de détermination de la position géographique dudit terminal radio mobile (108) ; en ordonnant audit terminal radio mobile (108) d'émettre des signaux numériques montants sur un canal de trafic, si ledit terminal radio mobile soit émet des signaux analogiques, soit n'émet pas de signal ; en mesurant dans chaque unité de mesure des instants d'arrivée sur une liaison montante (130) des informations d'instants d'arrivée sur le canal de trafic en recevant sur ledit contrôleur de réseau lesdites informations de mesure des instants d'arrivée de chaque unité de mesure des instants d'arrivée sur une liaison montante (130) et une référence audit canal de trafic ; en traduisant une identité dudit canal de trafic en une identité dudit terminal radio mobile (108) ; en envoyant lesdites informations de mesure des instants d'arrivée sur la liaison montante et ladite identité vers ledit noeud de service (103) ; et en calculant dans ledit noeud de service (103) la position géographique dudit terminal radio mobile (108) en utilisant lesdites informations de positions connues de ladite pluralité d'unités de mesure des instants d'arrivée sur une liaison montante (130) et lesdites informations de mesure des instants d'arrivée sur la liaison montante.

19. Système radio mobile selon la revendication 18, dans lequel ladite opération consistant à ordonner comprend l'établissement d'un appel vers ledit terminal radio mobile (108).

20. Système radio mobile selon la revendication 18, dans lequel ladite opération consistant à ordonner comprend le fait d'activer l'émission par ledit terminal radio mobile (108) si ledit terminal radio mobile (108) est inactif et est du type à émission discontinue.

21. Système radio mobile selon la revendication 18, dans lequel ladite opération consistant à ordonner comprend l'envoi à un terminal radio mobile analogique d'informations ordonnant audit terminal radio mobile analogique de répondre sur la liaison montante avec des informations numériques.

22. Système radio mobile selon la revendication 18, dans lequel ladite opération consistant à ordonner comprend l'envoi d'informations à un terminal paquet ordonnant audit terminal paquet de répondre sur la liaison montante.

23. Système radio mobile selon la revendication 18, dans lequel ledit équipement de mesure des instants d'arrivée sur la liaison montante comprend un appareil de mesure de la direction d'arrivée.

24. Unité mobile destinée à être utilisée dans la détermination d'une position d'un second terminal radio mobile (108), comprenant :
une station de base radio (BS1) selon la revendication 15, connectée à un premier terminal radio mobile (601) ;
un moyen destiné à recevoir une instruction de mesure des instants d'arrivée sur une liaison montante des signaux émis par ledit second terminal radio mobile (108), sur un canal de trafic spécifique ;
un moyen destiné à déterminer et à renvoyer une position dudit premier terminal radio mobile (601) ; et
un moyen destiné à mesurer et à renvoyer lesdits instants d'arrivée sur la liaison montante desdits signaux émis par ledit second terminal radio mobile (108).

25. Unité mobile selon la revendication 24, dans laquelle ledit moyen de détermination comprend un récepteur GPS.

26. Unité mobile selon la revendication 24, dans laquelle ledit moyen de détermination comprend le fait d'avoir une connaissance prédéterminée d'une position dudit premier terminal radio mobile et de renvoyer manuellement ladite position.
